# EUROPÄISCHE PATENTSCHRIFT

(11) **EP 1 039 154 B1**
(45) Veröffentlichungstag und Bekanntmachung des Hinweises auf die Patenterteilung: **26.05.2004**
(21) Anmeldenummer: 00201009.8
(22) Anmeldetag: 20.03.2000
(51) Int. Cl.: F16B 37/04, F16B 21/02

(54) **Befestigungssystem**
Fastening system
Système de fixation

(30) Priorität: 19.03.1999 NL 1011606
(43) Veröffentlichungstag der Anmeldung: 27.09.2000
(73) Patentinhaber: J. van Walraven B.V., 3641 RK Mijdrecht (NL)
(72) Erfinder: van Walraven, J., 3641 GP Mijdrecht (NL)
(74) Vertreter: Brookhuis, Hendrik Jan Arnold

(56) Entgegenhaltungen:
- EP-A- 0 775 838
- DE-A- 4 444 413
- FR-A- 2 677 430
- US-A- 5 799 907

## Beschreibung

Die vorliegende Erfindung bezieht sich auf ein Befestigungssystem nach dem Oberbegriff des Anspruchs 1, welches Befestigungssystem allgemein bekannt ist.

In einer aus dem Stand der Technik allgemein bekannten Ausbildung ist das Profilelement eines derartigen Befestigungssystems eine im Querschnitt C-förmige Metallschiene mit zwei parallelen und sich in Längsrichtung erstreckenden Seiten, mit einem Boden, der die Seiten an ihren unteren Längsrändern miteinander verbindet, und mit einer Oberseite, die von zwei, jeweils ab einem oberen Längsrand einer Seite nach innen gerichtete Flanschen gebildet ist, welche Flansche zwischen sich einen sich über die gesamte Länge des Profilelements erstreckenden Längsschlitz mit einer Breite A begrenzen. Dieses bekannte metallene Profilelement hat in dem Boden ein Lochmuster mit Löchern, die im wesentlichen dazu bestimmt sind, das Profilelement an einer Wand oder Decke befestigen zu können. Längliche Aussparungen sind Teil dieses bekannten Lochmusters, die in einem Abstand zueinander in dem Boden des Profilelements angeordnet sind.

Derartige Profilelemente sind im Handel und werden als Teil eines Befestigungssystems angewendet, welches Befestigungssystem weiter mit dem Profilelement zu verbindende Befestigungseinheiten umfaßt. Hierbei sind die Abmessungen des Profilelements und der Befestigungseinheiten aneinander angepaßt, welche Kombinationen von dem Hersteller in dem Katalog angegeben werden.

Eine mit einem derartigen Profilelement zu kombinierende Befestigungseinheit ist in verschiedenen Ausbildungen bekannt.

Eine derartige Befestigungseinheit umfaßt einen länglichen Mutterkörper, der üblicherweise aus Metall hergestellt ist. Der längliche Mutterkörper hat eine Breite C, die geringfügig kleiner als die Breite A des Längsschlitzes des mit diesem zu kombinierenden Profilelements ist, und hat eine Länge D, die größer als die Breite A des Längsschlitzes des Profilelements ist.

Um beim Kombinieren der Befestigungseinheit und des Profilelements eine möglichst optimale mechanische Belastbarkeit zu erhalten, ist bei den Systemen, um die es sich hier handelt, bekannt, daß die Breite C in der Nähe der Breite A liegt, unter Beibehaltung eines Montagespiels, das die Montage ermöglicht.

Die bekannten Befestigungseinheiten, die Teil einer hier gemeinten Befestigungseinheit sind, umfassen weiter ein mit der Hand anzufassendes Griffmittel, das mit dem länglichen Mutterkörper verbunden ist, und über die Oberseite des Mutterkörpers herausragt.

Beim Montieren der Befestigungseinheit an der Oberseite des Profilelements kann dann die Befestigungseinheit an dem Griffmittel angefaßt werden, und der Mutterkörper, während dieser Mutterkörper mit seiner Unterseite im wesentlichen parallel zu der Oberseite des Profilelements ausgerichtet ist, mit seiner Längsachse fluchtend mit dem Längsschlitz gemacht werden kann, und dann zwischen die Flansche hindurch in das Profilelement eingebracht werden. Durch anschließend den Mutterkörper zu drehen, kann erreicht werden, daß der längliche Mutterkörper mit seinen Enden die Flansche des länglichen Profilelements hintergreift.

Der Mutterkörper kann in dieser gedrehten Stellung an die Rückseite der Flansche, mit Hilfe von Spannmitteln, die zu der Befestigungseinheit gehören, festgesetzt werden.

Die Befestigungseinheit, die Teil eines derartigen Systems ist, kann, wie vorher erwähnt, sehr unterschiedliche Ausbildungen haben.

In einer ersten bekannten Ausbildung umfaßt eine derartige Befestigungseinheit einen länglichen Mutterkörper, mit einem in diesem festgesetzten, oder integral angeformten und mit einem Außengewinde versehenen Schaft oder Stab, der ab der Oberseite des Mutterkörpers herausragt. Eine derartige Befestigungseinheit umfaßt weiter ein Auflageorgan, das sich an die Außenseite der Flansche des Profilelements anlegt, und eine auf den Schaft aufgeschraubte Sicherungsmutter. Gegebenenfalls befindet sich eine Feder zwischen der Sicherungsmutter und dem Auflageorgan. Durch ein Anziehen der Sicherungsmutter wird dann der Mutterkörper fest an das Profilelement gespannt.

In einer zweiten bekannten Ausbildung umfaßt eine derartige bekannte Befestigungseinheit einen länglichen Mutterkörper, der mit einem Schraubenloch für ein später darin einzuschraubendes Bolzenteil versehen ist. An dem Mutterkörper ist ein federnder Klemmkörper befestigt, der dazu dient, den Mutterkörper an der Rückseite der Flansche des Profilelements festzuklemmen, solang das Bolzenteil noch nicht angeordnet ist, um den länglichen Mutterkörper fest an die Unterseite der Flansche anzuziehen. Der Klemmkörper bildet dann sowohl das Griffteil, das angefaßt wird, wenn der Mutterkörper durch den Längsschlitz in das Profilelement gebracht wird, als auch ein Teil der Spannmittel.

Die obengenannten bekannten Befestigungeinheiten, sowie in dem Oberbegriff des Anspruchs 1 beschriebene Befestigungseinheiten, sind unter anderen in den nachfolgenden Patentschriften: US 4 830 531, US 4 840 525, US 5 209 619, US 4 666 355, US 3 493 025, EP 0 775 838, EP 0 604 361, EP 0 805 279, DE 197 22 781, EP 0 702 160, FR 2 677 430 und EP 0 731 282 beschrieben worden.

Eine bekannte Anwendung eines derartigen Befestigungssystems ist die Befestigung von Rohrschellen an der Wand oder der Decke eines Gebäudes. Auch werden derartige Befestigungssysteme verwendet, um einen Rahmen aus mehreren miteinander verbundenen Profilelementen herzustellen. Ein derartiger Rahmen wird zum Beispiel als Unterstützung für Wandplatten angewendet.

Um mehrere nebeneinander verlaufende Leitungen entlang einer Wand anzuordnen, wird oft zuerst eine nach Maß abgekürzte Länge des Profilelements rechtwinklig ab der Wand hervorstehend angeordnet. An der Seite des Längsschlitzes des Profilelements, zum Beispiel an der nach oben gerichteten Seite, werden dann mehrere Befestigungseinheiten an dem Profilelement, zum Beispiel des in der DE 197 22 778 gezeigten Typs, jeweils mit einem in die Höhe ragenden und mit einem Schraubengewinde versehenen Schaft, angeordnet. Anschließend wird auf jedem Schaft eine Rohrschelle befestigt.

Bei dieser Montage der Leitungen besteht oft der Wunsch, oder die Notwendigkeit, eine oder mehrere Leitungen an der dem Längschlitz gegenüberliegenden Seite, der Bodenseite, des Profilelements zu befestigen. Bei den bekannten Befestigungssystemen muß dazu ein langer Schraubenbolzen von oben durch das Profilelement, durch ein Loch in dem Boden, hindurchgesteckt werden, wobei dann zwischen dem Kopf des Schraubenbolzens und der Oberseite des Profilelements eine Abschlußplatte angeordnet wird. Auf dem unter dem Profilelement nach unten ragenden Teil dieses Schraubenbolzens wird dann eine Rohrschelle angeordnet.

Dies hat den Nachteil, daß die Oberseite des Profilelements wegen der dort vorhandenen Rohrschellen und/oder bereits verlegten Leitungen, oft schwer zugänglich für den Monteur ist, so daß die Montage unerwünscht zeit- und arbeitsaufwendig ist.

Der vorliegenden Erfindung liegt die Aufgabe zugrunde, ein verbessertes Befestigungssystem zu schaffen, das obengenannten Nachteil aufhebt.

Die vorliegende Erfindung schafft dazu ein Befestigungssystem nach Anspruch 1. Dadurch, daß nun die Breite der länglichen Aussparungen in dem Boden des Profilelements größer als die Breite der mit diesem Profilelement zu kombinierenden Befestigungseinheiten ist, kann der Monteur auf einfache Weise von unten eine Befestigungseinheit in einer länglichen Aussparung in dem Boden des Profilelements anordnen.

Vorzugsweise weist das Montagespiel zwischen der Breite A und der Breite C höchstens 3 Millimeter auf, besonders bevorzugt ist dabei höchstens 2 Millimeter, um so eine optimale Belastbarkeit zu erhalten.

Mit Vorteil ist die Länge L der länglichen Aussparungen in dem Boden größer als die Länge D des länglichen Mutterkörpers, so daß der Mutterkörper mit seiner Unterseite im wesentlichen parallel zu dem Boden des Profilelements durch die längliche Aussparung in das Profilelement gebracht werden kann. Es ist aber auch denkbar, daß die Länge L in solcher Weise kleiner als die Länge D ist, daß dann der Mutterkörper um eine Querachse gekippt durch die längliche Aussparung in dem Boden des Profilelements gesteckt werden kann, und dann wieder zurückgekippt und eventuell gedreht werden, so daß der Mutterkörper das Profilelement hintergreift.

Die erfindungsgemäße Maßnahme ist bei der Herstellung des Profilelements des Systems einfach und ohne zusätzliche Bearbeitungen zu realisieren. Faktisch läuft diese Maßnahme auf die Tatsache hinaus, daß die länglichen Aussparungen in dem Boden des Profilelements breiter als bei den bekannten Profilelementen gemacht werden. Durch diese auf einfache Weise zu realisierende erfindungsgemäße Maßnahme kann ein und dieselbe Befestigungseinheit, die dazu vorgesehen ist, mit einem bestimmten Profilelement eine erfindungsgemäße Befestigungseinheit zu bilden, sowohl an der Seite des Längsschlitzes, als auch an der Seite des Bodens dieses Profilelements befestigt werden. Die vorbeschriebene aufwendige Lösung ist also nicht mehr notwendig, und der Monteur kann schnell und effizient arbeiten.

Vorzugsweise ist die Breite B der länglichen Aussparungen in dem Boden des länglichen Profilelements weniger als 1 Millimeter größer als die Breite C des länglichen Mutterkörpers der Befestigungseinheit, und besonders bevorzugt ist die Breite B der Aussparungen in dem Boden des länglichen Profilelements weniger als 0,5 Millimeter größer als die Breite C der Mutterkörpers der Befestigungseinheit. Durch die Breite B der länglichen Aussparungen in dem Boden so klein wie möglich zu der Breite des Mutterkörpers zu halten, wird erreicht, daß das längliche Profilelement weiterhin eine größt mögliche Steifheit und Festigkeit behält. Zugleich wird der von dem in die Klemmstellung gedrehte Mutterkörper zu überbrückende Abstand zwischen den Flanschen auf diese Weise so klein wie möglich gehalten, was vorteilhaft für die Belastbarkeit des Befestigungssystems ist.

Besonders bevorzugt gleicht die Breite B der länglichen Aussparung in dem Boden der Breite A des Längsschlitzes in der Oberseite. Die vorliegende Erfindung wird nachfolgend anhand der Zeichnung näher erläutert werden. Es zeigt:
- Fig. 1: eine perspektivische Ansicht eines Ausbildungsbeispiels der erfindungsgemäßen Befestigungseinheit;
- Fig. 2: einen Querschnitt entlang der Linie II-II in Fig. 1 mit den Befestigungseinheiten in einer ersten Position;
- Fig. 3: die Darstellung der Fig. 2 mit den Befestigungseinheiten in einer zweiten Position;
- Fig. 4: die Darstellung der Fig. 2 mit den Befestigungseinheiten in einer dritten Position,
- Fig. 5: in einer Ansicht gemäß Figur 2 das Profilelement mit einer anderen Befestigungseinheit,
- Fig. 6: die Befestigungseinheit der Figur 5 in aufgelösten Einzelteilen.

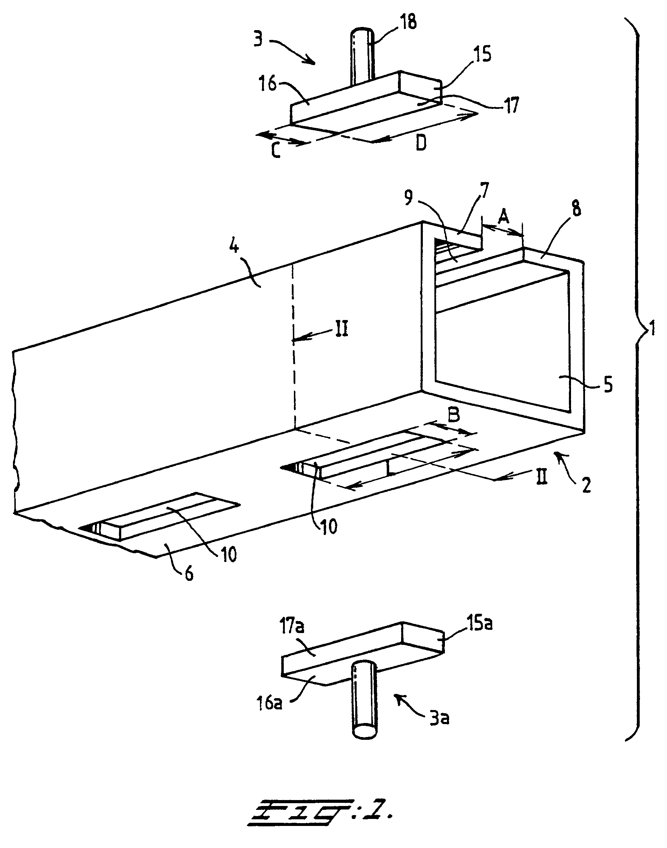

In Figur 1 ist ein erfindungsgemäßes Befestigungssystem 1 mit einem Profilelement 2 und mit zwei identischen und an das betreffende Profilelement angepaßten Befestigungseinheiten 3, 3a dargestellt.

Das Profilelement 2 ist hier eine gerade Metallschiene mit einem im wesentlichen C-förmigen Querschnitt. Das Profilelement 2 hat zwei parallele und sich in Längsrichtung erstreckende Seiten 4, 5, einen Boden 6, der die unteren Längsränder der Seiten 4, 5 verbindet, und eine Oberseite, die von einem ab dem oberen Längsrand einer jeden Seite 4, 5 nach innen gerichteten Flansch 7, 8 gebildet ist. Zwischen den Flanschen 7, 8 erstreckt sich über die gesamte Länge des Profilelements 2 ein Längsschlitz, welcher Längsschlitz 9 eine Breite A aufweist.

In dem Boden 6 sind mehrere längliche Schlitzaussparungen 10 vorgesehen. Die Schlitzaussparungen 10 liegen in einem Abstand zueinander und können Teil eines nicht weiter gezeigten Lochmusters sein, das weiter ein oder mehrere andere Löcher umfassen kann, zum Beispiel kreisförmige Löcher, die zur Befestigung des Profilelements 2 an einer Wand oder der Decke dienen können.

Die Schlitzaussparungen 10 sind gekennzeichnet durch eine Breite B und eine Länge L, wobei die Länge L größer als die Breite B ist. In diesem Beispiel liegt die Längsachse einer jeden Schlitzaussparung 10 parallel zu der Längsachse des Profilelements 2. In der gezeigten Ausbildung liegt die Längsachse einer jeden Schlitzaussparung 10 in der Mitte des Bodens 6.

In der gezeigten bevorzugten Ausbildung gleicht die Breite B der Schlitzaussparungen 10 der Breite A des Längsschlitzes 9 des Profilelements. Hierdurch ist eine optimale Abstimmung zwischen der Breite des Längsschlitzes 9 und den Schlitzaussparungen 10 einerseits und der breite C des länglichen Mutterkörpers andererseits 15, 15a möglich.

In einer nicht gezeigten Variante kann vorgesehen sein, daß die Längsachse einer jeden Schlitzaussparung 10 in einem Winkel zu der Längsachse des Profilelements 2 ausgerichtet ist.

Die Form der Aussparungen 10 ist hier rechtwinklig, aber könnte auch anders sein. In der Praxis sind die Ecken der Aussparungen 10 mit Vorteil abgerundet.

Der gegenseitige Abstand zwischen den Aussparungen 10 wird im wesentlichen von den erforderten Montagemöglichkeiten bestimmt, zum Beispiel der gegenseitige Abstand zwischen nebeneinander liegenden Leitungen, die mit dem Befestigungssystem befestigt werden.

Wie vorher bemerkt sind die gezeigten Befestigungseinheiten 3 und 3a identisch. Aus diesem Grund wird nur die Befestigungseinheit 3 näher beschrieben werden, wobei die übrigen ähnlichen Teile der Befestigungseinheit 3 mit dem gleichen Bezugszeichen, versehen mit einem "a", angegeben sind.

Die Befestigungseinheit 3 umfaßt einen länglichen, im wesentlichen rechteckigen Mutterkörper 15 mit einer Oberseite 16 und einer dieser gegenüberliegenden Unterseite 17.
Der Mutterkörper 15 hat eine Länge D und eine Breite C, wobei die Länge D größer als die Breite C ist. Die Breite C ist kleiner als die Breite A des Längsschlitzes 9.

Der Mutterkörper 15, 15a, wie in Fig. 1 dargestellt, braucht nicht rechtwinklig zu sein. Ausbildungen, bei denen die Ecken nicht abgeschrägt, bzw. abgerundet sind, sind ebenfalls möglich.

Der Mutterkörper 15 ist weiter mit einem mit einem Außengewinde versehenen Schaft 18 versehen, der ab der Oberseite 16 herausragt und zugleich als Griffmittel zum mit der Hand anfassen der Befestigungseinheit 3 dient. Weiter umfaßt die Befestigungseinheit nicht gezeigte Spannmittel, zum Beispiel eine auf den Schaft 18 geschobene Unterlegscheibe und eine auf den Schaft 18 aufgeschraubte Mutter, wobei dann zugleich ein Federorgan zwischen der Unterlegscheibe und der Mutter, oder zwischen der Unterlegscheibe und dem länglichen Mutterorgan vorgesehen sein kann. Mit diesen Spannmitteln kann dann der die Flansche hintergreifende Mutterkörper 15 an die Flansche gespannt werden.

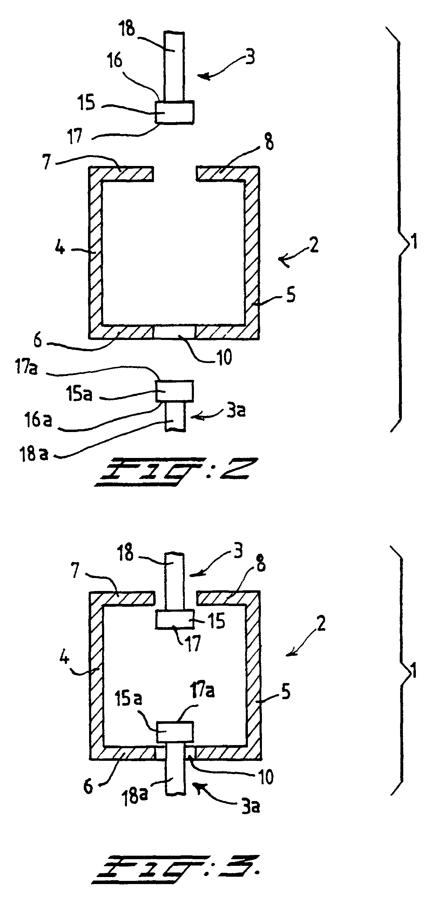

Anhand der Figuren 2-4 wird die Wirkung des Befestigungssystems 1 näher erläutert werden.

In Fig. 2 ist ein Querschnitt des Profilelements 2 entlang der Linie II-II (Fig. 1) dargestellt, wobei an der Oberseite eine Befestigungseinheit 3, und an der Bodenseite eine Befestigungseinheit 3a positioniert ist. Die Befestigungseinheiten 3, 3a werden in dieser ersten Stellung mit der Hand, insbesondere bei dem Schaft 18, oder einem auf diese aufgeschraubten Organ festgehalten, und in solcher Weise zu dem Längsschlitz 9, beziehungsweise der Schlitzaussparung 10 positioniert, daß die Unterseite 17, 17a eines jeden Mutterkörpers 15, 15a im wesentlichen parallel zu der Oberseite, beziehungsweise dem Boden 6 des Profilelements 2 ausgerichtet ist. Außerdem wird der Mutterkörper 15, 15a mit seiner Längsachse fluchtend mit der Längsachse des Längsschlitzes 9, beziehungsweise der Längsachse der Aussparung 10 (sieh Fig. 2) gemacht.

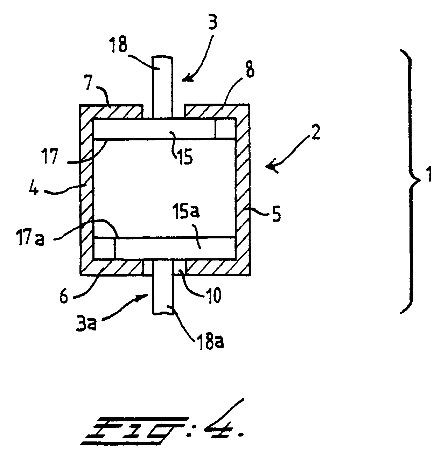

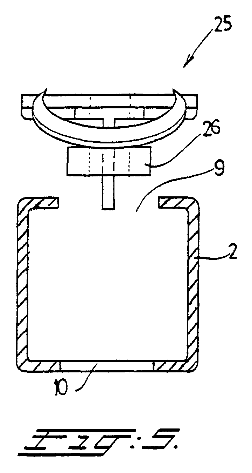

Anschließend wird der Mutterkörper 15, 15a durch den Längschlitz 9, oder aber die Aussparung 10 in das Profilelement 2 gebracht (sieh Fig. 3) und anschließend gedreht (sieh Fig. 4), um die Flansche 7, 8, beziehungsweise den Boden 6 zu hintergreifen. Dann kann der Mutterkörper 15, 15a fest an das Profilelement gezogen werden und mit zu der Befestigungseinheit 3, 3a gehörenden Spannmitteln festgesetzt werden.

Der wichtige Aspekt der Erfindung ist deshalb, daß die Befestigungseinheiten 3, 3a sowohl an der Oberseite, als auch an der Bodenseite des Profilelements befestigt werden können, wobei dann von einer Anpassung der Befestigungseinheiten 3, 3a an den Längsschlitz 9 und die Aussparungen 10 die Rede ist. Die Anpassung betrifft insbesondere die Breite C des Mutterkörpers 15, 15a, die in einer bevorzugten Ausbildung weniger als 1 Millimeter kleiner als die hier jedenfalls identischen Breiten A und B ist.

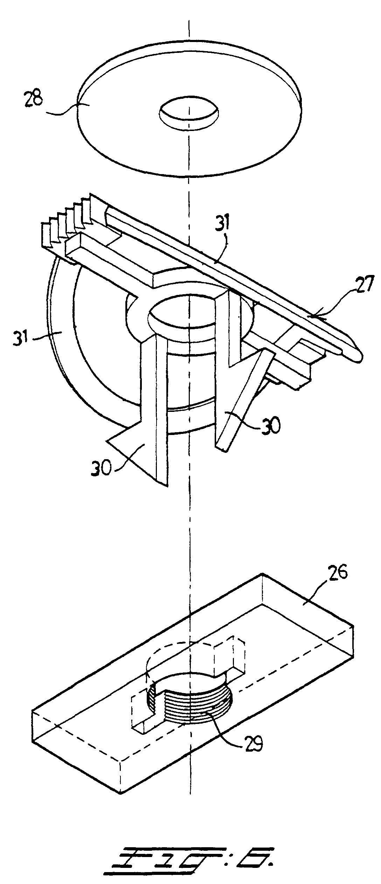

In Figur 5 ist das Profilelement 2 ersichtlich, sowie eine mit diesem zu kombinierende Befestigungseinheit 25, die anders als die eher beschriebene Befestigungseinheit 3, 3a ausgeführt ist und die im Einzelnen in Figur 6 gezeigt ist.

Die Befestigungseinheit 25 umfaßt einen länglichen Mutterkörper 26 und mit dem Mutterkörper verbundene Spannmittel, die in diesem Beispiel ein elastisches Federorgan 27 und eine Unterlegscheibe 28 umfassen, welche Teile zu einem Ganzen vormontiert sind.

Der Mutterkörper 26 hat ein Schraubenloch 29 zum darin Einschrauben eines Bolzenteils, auf welches Bolzenteil eine Mutter aufgeschraubt werden kann, die dann an der Unterlegscheibe 28 anliegt. Das Federorgan 27 hat Verbindungsschenkel 20, mit denen das Federorgan 27 mit dem Mutterkörper 26 verbunden ist. Weiter hat das Federorgan 27 ein Ringteil 31 mit zwei Hälften, die dazu vorgesehen sind, sich elastisch zusammendrückbar an das Profilelement 12 zu stützen. Die Unterlegscheibe 28, vorzugsweise aus Metall, ist in dem Federorgan 27 geklemmt.

## Patentansprüche

1. Befestigungssystem umfassend in Kombination:
- ein längliches Profilelement (2), das eine Oberseite mit Flanschen (7, 8) hat, die zwischen sich einen sich über die Länge des Profilelements erstreckenden Längsschlitz (9) mit einer Breite A begrenzen, welches Profilelement weiter einen der Oberseite gegenüberliegenden Boden aufweist, wobei in dem Boden (6) mehrere längliche Aussparungen (10) mit einer Breite B und einer Länge L vorgesehen sind, welche länglichen Aussparungen (10) im Abstand zueinander liegen, und
- eine mit dem Profilelement zu verbindende Befestigungseinheit (3, 3a;25), umfassend einen länglichen Mutterkörper (15;26),
wobei der längliche Mutterkörper eine Oberseite (16) und eine dieser gegenüberliegende Unterseite (17) aufweist,
wobei der Mutterkörper (15;26) eine Breite C hat, die nur ein Montagespiel kleiner als die Breite A des Längsschlitzes (9) des länglichen Profilelements (2) ist und eine Länge D hat, die größer als die Breite A des Längsschlitzes (9) des länglichen Profilelements (2) ist,
so daß der längliche Mutterkörper (15, 15a;26), während dieser Mutterkörper (15;26) mit seiner Unterseite (17) im wesentlichen parallel zu der Oberseite des Profilelements (2) ausgerichtet ist, mit seiner Längsachse fluchtend mit dem Längsschlitz (9) gemacht werden kann, und dann zwischen die Flansche (7, 8) hindurch in das Profilelement gebracht und anschließend gedreht werden kann, um die Flansche (7, 8) des länglichen Profilelements (2) zu hintergreifen, wobei die Befestigungseinheit (3, 3a) weiter ein mit der Hand anzufassendes Griffmittel (18, 18a) umfaßt, das mit dem Mutterkörper (15, 15a) verbunden ist, und über die Oberseite (16, 16a) des Mutterkörpers (15, 15a) herausragt, und wobei die Befestigungseinheit weiter mit dem Mutterkörper verbundene Spannmittel umfaßt, damit der die Flansche hintergreifende Mutterkörper an die Flansche angespannt werden kann,
**dadurch gekennzeichnet, daß** die Breite B der länglichen Aussparungen (10) in dem Boden (6) größer als die Breite C des Mutterkörpers (15a) der Befestigungseinheit (3,3a;25) ist.

2. Befestigungssystem nach Anspruch 1, bei dem das Montagespiel höchstens 3 Millimeter, vorzugsweise 2 Millimeter beträgt.

3. Befestigungssystem nach Anspruch 1 oder 2, bei dem die Länge L der länglichen Aussparungen (10) in dem Boden (6) größer als die Länge D des Mutterkörpers (15, 15a;26) ist.

4. Befestigungssystem nach einem oder mehreren der vorhergehenden Ansprüche, bei dem die Breite B der länglichen Aussparungen (10) in dem Boden (6) des länglichen Profilelements (2) weniger als 1 mm größer als die Breite C des länglichen Mutterkörpers (15a) der Befestigungseinheit (3a) ist.

5. Befestigungssystem nach einem oder mehreren der vorhergehenden Ansprüche, bei dem die Breite B der länglichen Aussparungen (10) in dem Boden (6) des länglichen Profilelements (2) weniger als 0,5 mm größer als die Breite C des Mutterkörpers (15a) der Befestigungseinheit (3a) ist.

6. Befestigungssystem nach einem oder mehreren der vorhergehenden Ansprüche, bei dem die Breite B der Aussparungen (10) in dem Boden (6) des länglichen Profilelements (2) der Breite A des Längsschlitzes an der Oberseite des Profilelements gleicht.

7. Befestigungssystem nach einem oder mehreren der vorhergehenden Ansprüche 1-6, bei dem die Breite B der Aussparungen (10) in dem Boden (6) des länglichen Profilelements (2) kleiner als die Breite A des Längsschlitzes an der Oberseite des Profilelements ist.

## Claims

1. Fastening system comprising in combination:
- an elongated profile element (2) having an upper side with flanges (7, 8) which between themselves bound a longitudinal slot (9) having a width A extending over the length of the profile element which further has a floor opposite the upper side, wherein in the floor (6) a plurality of oblong recesses (10) having a width B and a length L are provided which oblong recesses (10) are spaced relative to one another and
- a fastening unit (3, 3a; 25) to be connected to the profile element comprising an oblong parent body (15; 26),
wherein the oblong parent body has an upper side (16) and an underside (17) located opposite the former,
wherein the parent body (15; 26) has a width C which is only a fitting clearance smaller than the width A of the longitudinal slot (9) of the elongated profile element (2) and has a length D which is greater than the width A of the longitudinal slot (9) of the elongated profile element (2),
so that the oblong parent body (15, 15a; 26) while this parent body (15; 26) is oriented with its underside (17) substantially parallel to the upper side of the profile element (2) can be made to align by its longitudinal axis with the longitudinal slot (9) and then can be introduced between the flanges (7, 8) into the profile element and subsequently turned in order to engage behind the flanges (7, 8) of the elongated profile element (2), wherein the fastening unit (3, 3a) further comprises a gripping means (18, 18a) to be grasped manually which is connected to the parent body (15, 15a) and projects above the upper side (16, 16a) of the parent body (15, 15a), and wherein the fastening unit further comprises clamping means connected to the parent body so that the parent body engaging behind the flanges can be clamped against the flanges,
**characterized in that** the width B of the oblong recesses (10) in the floor (6) is greater than the width C of the parent body (15a) of the fastening unit (3, 3a; 25).

2. Fastening system according to claim 1 in which the fitting clearance is at most 3 millimetres, preferably 2 millimetres.

3. Fastening system according to claim 1 or 2 in which the length L of the oblong recesses (10) in the floor (6) is greater than the length D of the parent body (15, 15a; 26).

4. Fastening system according to one or more of the preceding claims in which the width B of the oblong recesses (10) in the floor (6) of the elongated profile element (2) is less than 1 mm greater than the width C of the oblong parent body (15a) of the fastening unit (3a).

5. Fastening system according to one or more of the preceding claims in which the width B of the oblong recesses (10) in the floor (6) of the elongated profile element (2) is less than 0.5 mm greater than the width C of the parent body (15a) of the fastening unit (3a).

6. Fastening system according to one or more of the preceding claims in which the width B of the recesses (10) in the floor (6) of the elongated profile element (2) equals the width A of the longitudinal slot on the upper side of the profile element.

7. Fastening system according to one or more of the preceding claims 1-6 in which the width B of the recesses (10) in the floor (6) of the elongated profile element (2) is smaller than the width A of the longitudinal slot on the upper side of the profile element.

## Revendications

1. Système de fixation comprenant en combinaison:
- un élément profilé allongé (2), qui possède un côté supérieur comportant des brides (7, 8), qui délimitent entre elles une fente longitudinale (9) qui s'étend sur la longueur de l'élément profilé et possède une largeur A, lequel élément profilé possède en outre un fond situé à l'opposé du côté supérieur, plusieurs évidements allongés (10), qui possèdent une largeur B et une longueur L, et étant prévus dans le fond (6), lesquels évidements allongés (10) s'étendent à distance les uns des autres,
- une unité de fixation (3, 3a; 25) devant être reliée à l'élément profilé et comprenant un corps mère allongé (15; 26),
dans lequel le corps mère allongé possède un côté supérieur (16) et un côté inférieur (17) situé à l'opposé du côté supérieur,
dans lequel le corps mère (15; 26) possède une largeur C, qui est seulement un jeu de montage inférieur à la largeur A de la fente allongée (9) de l'élément profilé allongé (2) et possède une longueur D, qui est supérieure à la largeur A de la fente allongée (9) de l'élément profilé allongé (2),
de sorte qu'on peut orienter le corps mère allongé (15, 15a; 26) de manière que son axe longitudinal soit aligné avec la fente longitudinale (9), alors que ce corps mère (15; 26) est orienté de telle sorte que son côté inférieur (17) est essentiellement parallèlement au côté supérieur de l'élément profilé (2), et qu'on peut ensuite l'introduire entre les brides (7, 8) dans l'élément profilé et le faire ensuite pivoter de manière qu'il s'engage derrière les brides (7, 8) de l'élément profilé allongé (2), auquel cas l'unité de fixation (3, 3a) comporte en outre des moyens de saisie (18, 18a) pouvant être saisis à la main et qui sont reliés au corps mère (15, 15a) et fait saillie au-dessus du côté supérieur (16, 16a) du corps mère (15, 15a), et l'unité de fixation comprend en outre un moyen de serrage, qui est relié au corps mère de manière que le corps mère, qui s'engage derrière la bride, puisse être serré contre la bride,
**caractérisé en ce que** la largeur B des évidements allongés (10) dans le fond (6) est supérieure à la largeur C du corps mère (15a) de l'élément de fixation (3, 3a; 25).

2. Système de fixation selon la revendication 1, dans lequel le jeu de montage est égal au maximum à 3 millimètres et de préférence à 2 millimètres.

3. Système de fixation selon la revendication 1 ou 2, dans lequel la longueur L des évidements allongés (10) dans le fond (6) est supérieure à la longueur D du corps mère (15, 15a; 26).

4. Système de fixation selon une ou plusieurs des revendications précédentes, dans lequel la largeur B des évidements allongés (10) dans le fond (6) de l'élément profilé allongé (2) est moins de 1 millimètre supérieure à la largeur C du corps mère allongé (15a) de l'unité de fixation (3a).

5. Système de fixation selon une ou plusieurs des revendications précédentes, dans lequel la largeur B des évidements allongés (10) dans le fond (6) de l'élément profilé allongé (2) est moins de 5 millimètres supérieure à la largeur C du corps mère (15a) de l'unité de fixation (3a).

6. Système de fixation selon une ou plusieurs des revendications précédentes, dans lequel la largeur B des évidements (10) dans le fond (6) de l'élément profilé allongé (2) est égale à la largeur A de la fente longitudinal située sur le côté supérieur de l'élément profilé.

7. Système de fixation selon une ou plusieurs des revendications précédentes 1 à 6, dans lequel la largeur B des évidements (10) dans le fond (6) de l'élément profilé allongé (2) est inférieure à la largeur A de la fente longitudinale sur le côté supérieur de l'élément profilé.
